## Europäisches Patentamt

## European Patent Office

## Office européen des brevets

(11) Veröffentlichungsnummer: **0 053 836**
**B1**

(12) **EUROPÄISCHE PATENTSCHRIFT**

(45) Veröffentlichungstag der Patentschrift:
11.07.84

(51) Int. Cl.³: **B 01 D 47/10,** B 01 D 53/18,
B 01 D 53/34

(21) Anmeldenummer: 81110257.3

(22) Anmeldetag: 08.12.81

(54) Vorrichtung und Verfahren zum Reinigen eines Gasstroms.

(30) Priorität: 09.12.80 DE 3046281

(43) Veröffentlichungstag der Anmeldung:
16.06.82 Patentblatt 82/24

(45) Bekanntmachung des Hinweises auf die Patenterteilung:
11.07.84 Patentblatt 84/28

(84) Benannte Vertragsstaaten:
BE DE FR GB IT NL

(73) Patentinhaber: Linde Aktiengesellschaft,
Abraham-Lincoln-Strasse 21, D-6200 Wiesbaden (DE)
Patentinhaber: Peabody Holmes Limited, Turnbridge,
Huddersfield, HD1 6RB (GB)

(72) Erfinder: Kersten, Jürgen, Hauptstrasse 2,
D-8021 Kleindingharting (DE)

(74) Vertreter: Schaefer, Gerhard, Dr., Linde
Aktiengesellschaft Zentrale Patentabteilung,
D-8023 Höllriegelskreuth (DE)

(56) Entgegenhaltungen:
DE - A - 2 405 669
DE - B - 1 259 297
DE - B - 1 260 442
FR - A - 2 382 260
FR - A - 2 442 072
US - A - 4 007 025
US - A - 4 209 502

VERFAHRENSTECHNISCHE BERICHTE,
Farbenfabriken Bayer AG, Leverkusen B.P. VOLGIN et
al. "Absorption von Schwefeldioxid in einer
Ammonsulfit-Bislufit-Lösung in einem Venturiwäscher"
Referat B 6818/15
INDUSTRIAL & ENGINEERING CHEMISTRY, PROCESS
DESIGN & DEVELOPMENT, Band 12, Nr. 4, 1973 S.
UCHIDA et al. "Gas absorption by alkaline solutions in a

(56) Entgegenhaltungen: (Fortsetzung)
venturi scrubber" Seiten 437 bis 443
WASSER LUFT UND BETRIEB, Band 17, Nr. 11, 1973,
"Auswaschverfahren" Seiten 408 bis 411

## Beschreibung

Die Erfindung betrifft eine Vorrichtung zum Abtrennen schwefelhaltiger Verbindungen, insbesondere Schwefelwasserstoff, aus einem Gasstrom, bei der mittels mindestens zwei bezüglich des Gasstromes in Serie geschalteter, vertikal angeordneter Venturiwäscher die schwefelhaltigen Verbindungen durch eine Waschflüssigkeit aus dem Gasstrom ausgewaschen werden. Ausserdem betrifft die Erfindung ein Verfahren zur Entschwefelung eines Gasstromes unter Verwendung einer derartigen Vorrichtung.

Gaswäschen werden häufig in Waschsäulen durchgeführt, in die der Gasstrom unten eintritt und im Gegenstrom zu herabrieselnder Waschflüssigkeit in engen Kontakt mit dieser tritt und als gereinigtes Gas am oberen Ende abgezogen wird. Es sind jedoch auch schon Wäscher bekannt geworden, in denen der enge Kontakt zwischen der Waschflüssigkeit und dem Gas dadurch hergestellt wird, dass der zu reinigende Gasstrom durch eine Venturidüse von einem unter erhöhtem Druck stehendem Waschmittel angesaugt wird. Die Verwendung eines derartigen Venturiwäschers ist beispielsweise für die Entschwefelung eines Gasstromes durch eine Stretfort-Wäsche beschrieben worden (The Oil and Gas Jornal, 02.01.1978 S. 78–80).

Um bei der Verwendung von Venturiwäschern eine ausreichende Reinheit des Gasstromes zu erzielen ist es häufig nötig, den Gasstrom nacheinander durch mehrere derartige Wäscher zu führen.

Aus der DE-B-12 59 297 ist eine Vorrichtung bekannt, die zum direkten Kühlen und Waschen heisser, staubhaltiger Gase mittels diffusorartiger, die Funktion von Venturiwäschern erfüllenden Kammern dient. Bei Auftreffen des heissen, zu reinigenden Gases auf die Waschflüssigkeit im Sumpf der Vorrichtung wird die Flüssigkeit aufgewirbelt, mit dem Gasstrom mitgerissen und in diffusorartigen Kammern geleitet, in denen eine zusätzliche Berieselung mit Behandlungsflüssigkeit erfolgt. Gemäss der DE-B 12 59 297 wird also eine dampfförmige Phase durch Aufwirbelung der Flüssigkeit ausgebildet.

Der Erfindung liegt die Aufgabe zugrunde, eine Vorrichtung der eingangs genannten Art zu entwickeln, mit der unter möglichst geringem Aufwand eine ausreichende und zuverlässige Reinigung eines Gasstromes möglich

Diese Aufgabe wird dadurch gelöst, dass die Venturiwäscher in einem im wesentlichen vertikal gerichteten Behälter in im wesentlichen gleicher Höhe angeordnet sind und eintrittsseitig und austrittsseitig jeweils in voneinander getrennten Teilräumen des Behälters liegen, wobei das Austrittsende je eines Venturiwäschers im selben Teilraum wie das Eintrittsende des nächstfolgenden Venturiwäschers liegt, dass die Teilräume des Behälters mindestens teilweise gebildet werden durch Trennwände einem oberen, an der Behälterdecke ansetzenden und im wesentlichen vertikal verlaufenden Teil oder Trennblech, einem mittleren, eine horizontale Versetzung der Trennwand bewirkenden und von einem Venturiwäscher durchstossenen Teil oder Trennblech und einem unteren, im wesentlichen vertikal verlaufenden Teil oder Trennblech, wobei die Trennwand eines ersten Teilraumes nur aus einem oberen und einem mittleren, an die Behälterwand anschliessenden Teil oder Trennblech besteht, dass mindestens einige Teilräume im unteren Bereich des Behälters offen sind und in einem gemeinsamen Reservoir für abzuziehende Waschflüssigkeit enden und dass ein erster Teilraum einen Zuführungsstutzen für den zu reinigenden Gasstrom und ein letzter Teilraum einen Abzugsstutzen für den gereinigten Gasstrom aufweist.

Das mittlere, eine horizontale Versetzung der Trennwand bewirkende Teilstück kann beispielsweise schräg oder horizontal verlaufen. Der untere Abschluss der Teilräume für den zu reinigenden Gasstrom wird dadurch bewirkt, dass im Betriebsfall der Flüssigkeitspegel der Waschflüssigkeit oberhalb der unteren Enden der Trennwände liegt. Dies kann durch eine einfache Regeleinrichtung, die für die Einhaltung eines vorgeschriebenen Flüssigkeitsstandes ohnehin erforderlich ist, leicht erreicht werden.

Die wesentlichen Vorteile der erfindungsgemässen Vorrichtung gegenüber der üblicherweise erforderlichen Hintereinanderschaltung mehrerer einzelner Waschvorrichtungen mit Venturiwäschern sind in der kompakten Bauweise und dadurch ermöglichten Platzersparnis, in verringertem Aufwand für die Verrohrung und Regelung der gesamten Waschvorrichtung und in einem reduzierten Druckabfall zu sehen.

Sofern nicht alle Teilräume in das gemeinsame Reservoir einmünden, ist es weiterhin zweckmässig, diese Teilräume innerhalb des Behälters mit einer Flüssigkeitsleitung mit dem Reservoir zu verbinden, um die in diesen Teilräumen anfallende Flüssigkeit abzuziehen. Eine solche Ausgestaltung kann beispielsweise für den ersten Teilraum vorteilhaft sein, da in ihm im Gegensatz zu den nachfolgenden Teilräumen keine grossen Mengen an Waschflüssigkeit anfallen, die abgeleitet werden müssen. Aus Gründen der Raumersparnis kann dieser erste Teilraum deshalb kleiner als die übrigen Teilräume gestaltet werden und oberhalb des Reservoirs für die abzuziehende Waschflüssigkeit enden.

Selbstverständlich können neben der erfindungsgemässen Reihenschaltung der Venturiwäscher innerhalb jeder einzelnen Waschstufe mehrere Venturiwäscher parallel geschaltet werden, um dadurch die Kapazität der Vorrichtung zu erhöhen.

Die erfindungsgemässe Vorrichtung eignet sich beispielsweise für die Entschwefelung eines Gasstromes bei einem relativ niedrigen Druck, der beispielsweise bei Drücken zwischen 0,9 und 1,5 bar. Der Gasstrom wird dabei in einen ersten Teilraum geleitet und mit einem für die Schwefelwasserstoffabtrennung geeigneten Waschmittel durch einen ersten Venturiwäscher in einen zweiten Teilraum gefördert. Beim Durchströmen durch das Venturirohr des Wäschers erfolgt dabei eine innige Vermischung zwischen der Waschflüssigkeit und dem Gasstrom, bei der ein Teil des Schwefelwasserstoffes aus dem Gas ausgewaschen wird. Im zweiten Teilraum erfolgt dann eine Phasentrennung zwischen der Waschflüssigkeit und dem Gasstrom, wobei das nunmehr mit Schwefelverbindungen beladene Waschmittel sich im unteren Bereich sammelt und von hier abgezogen wird, während der teilweise gereinigte Gasstrom im oberen Bereich dieses Teilraums einem weiteren Venturiwäscher zugeführt und unter weiterer Reinigung in einen dritten Teilraum gefördert wird. Dieser Vorgang wiederholt sich dann sooft, bis im letzten Teilraum ein Gasstrom einer gewünschten Reinheit vorliegt, der dann als Verfahrensprodukt abgezogen wird.

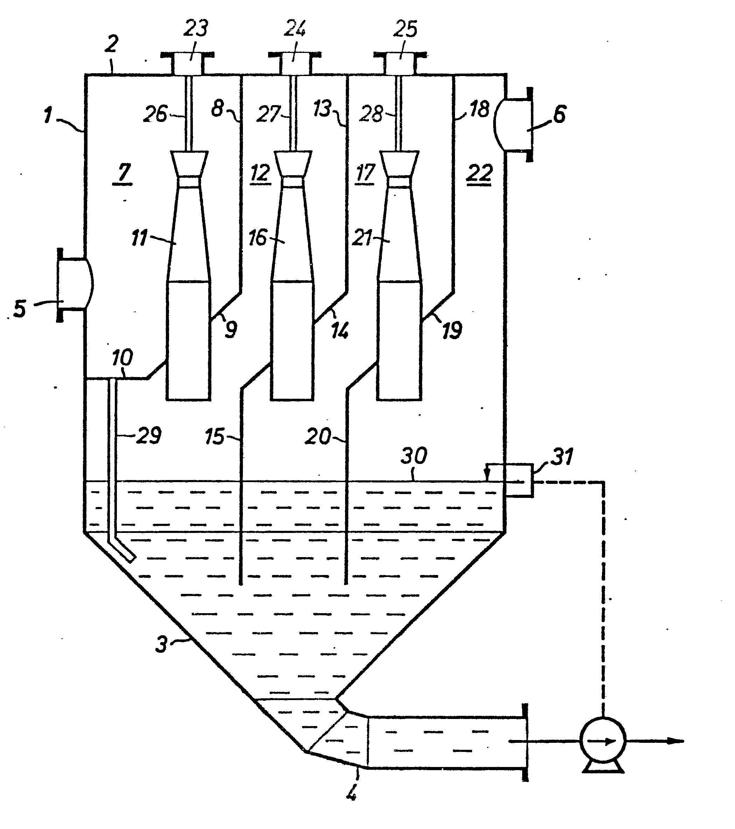

Weitere Einzelheiten der erfindungsgemässen Vorrichtung sind anhand der nachfolgenden Zeichnung erläutert. Die Zeichnung zeigt in schematischer Form ein Ausführungsbeispiel einer erfindungsgemässen Vorrichtung.

Der die erfindungsgemässe Vorrichtung umschliessende Behälter besteht aus einem zylindrischen, vertikal angeordneten Mantel 1, der oben durch eine Behälterdecke 2 und unten durch ein konisch zulaufendes Endstück 3 abgeschlossen ist. Das Endstück 3 steht mit einer Auslassleitung 4 für beladenes Waschmittel in Verbindung. Der zylindrische Teil des Behälters enthält ferner einen Zuführungsstutzen 5 für das zu reinigende Gas sowie einen Abzugsstutzen 6 für gereinigtes Gas.

Der Innenraum des Behälters ist in vier Teilräume unterteilt. Ein erster Teilraum 7 ist durch ein an der Behälterdecke 2 angesetztes vertikal verlaufendes Trennblech 8 sowie ein am unteren Ende dieses Trennbleches angesetztes schräg verlaufendes Trennblech 9 und schliesslich durch ein daran angefügtes waagerechtes Trennblech 10 abgesondert. Die Trennbleche 8, 9 und 10 durchsetzen den Behälter ungekrümmt und sind an den Berührungslinien mit dem zylindrischen Mantel 1 und der Behälterdecke 2 fest mit diesen Bauelementen verbunden. Das schräg verlaufende Trennblech 9 wird von einem ersten Venturiwäscher 11 durchstossen.

Ein an den ersten Teilraum 7 anschliessender zweiter Teilraum 12 wird durch Trennbleche 13 und 14, die den bereits beschriebenen Trennblechen 8 und 9 entsprechen sowie einem an das untere Ende des Trennblechs 14 anschliessenden vertikal verlaufenden Trennblech 15 festgelegt. Das vertikal verlaufende Trennblech endet frei im unteren, konisch verlaufenden Endstück 3 des des Behälters. Das schräg verlaufende Trennblech 14 wird von einem zweiten Venturiwäscher 16 durchstossen.

In gleicher Weise wird ein dritter Teilraum 17 durch Trennbleche 18, 19 und 20 festgelegt, wobei das schräg verlaufende Trennblech 19 von einem dritten Venturiwäscher 21 durchsetzt wird. Der verbleibende Teilraum 22 wird durch die Behälterwand begrenzt.

Die Venturiwäscher 11, 16 und 21 werden von der Behälterdecke über Anschlüsse 23, 24 bzw. 25 und Leitungen 26, 27 bzw. 28 mit Waschflüssigkeit versorgt. Aus dem unteren Bereich des Teilraumes 7 führt vom Trennblech 10 eine Leitung 29 in das untere konisch verlaufende Endstück 3 des Behälters.

Beim Betrieb der Vorrichtung wird im unteren Bereich des Behälters ein Flüssigkeitsspiegel 30 aufrechterhalten der oberhalb der unteren Enden der Trennbleche 15 und 20 liegt, wodurch die Teilräume 12, 17 und 22 für den Gasstrom gegeneinander angeschlossen werden. Der Flüssigkeitsstand kann über eine Regeleinrichtung 31, die beispielsweise die Entnahmerate der beladenen Waschflüssigkeit aus Auslassleitung 4 steuert, geregelt werden.

**Patentansprüche**

1. Vorrichtung zum Abtrennen schwefelhaltiger Verbindungen, insbesondere Schwefelwasserstoff, aus einem Gasstrom, bei der mittels mindestens zwei bezüglich des Gasstromes in Serie geschalteter, vertikal angeordneter Venturiwäscher (11, 16, 21) die schwefelhaltigen Verbindungen durch eine Waschflüssigkeit aus dem Gasstrom ausgewaschen werden dadurch gekennzeichnet, dass die Venturiwäscher (11, 16, 21) in einem im wesentlichen vertikal gerichteten Behälter in im wesentlichen gleicher Höhe angeordnet sind und eintrittsseitig und austrittsseitig jeweils in voneinander getrennten Teilräumen (7, 12, 17, 22) des Behälters liegen, wobei das Austrittsende je eines Venturiwäschers im selben Teilraum wie das Eintrittsende des nächstfolgenden Venturiwäschers liegt, dass die Teilräume (7, 12, 17, 22) des Behälters mindestens teilweise gebildet werden durch Trennwände mit einem oberen, an der Behälterdecke ansetzenden und im wesentlichen vertikal verlaufenden Teil oder Trennblech (8, 13, 18), einen mittleren, eine horizontale Versetzung der Trennwand bewirkenden und von einem Venturiwäscher durchstossenen Teil oder Trennblech (9, 14, 19) und einem unteren im wesentlichen vertikal verlaufenden Teil oder Trennblech (15, 20), wobei die Trennwand eines ersten Teilraumes (7) nur aus einem oberen (8) und einem mittleren an die Behälterwand anschliessenden Teil oder Trennblech (9, 10) besteht, dass mindestens einige Teilräume (12, 17, 22) im unteren Bereich des Behälters offen sind und in einem gemeinsamen Reservoir für abzuziehende Waschflüssigkeit enden und dass ein erster Teilraum (7) einen Zuführungsstutzen (5) für den zu reinigenden Gasstrom und ein letzter Teilraum (22) einen Abzugsstutzen (6) für den gereinigten Gasstrom aufweist.

2. Vorrichtung nach Anspruch 1, dadurch gekennzeichnet dass nicht im gemeinsamen Reservoir endende Teilräume (7) über eine in ihrem unteren Bereich beginnende Flüssigkeitsleitung (29) mit dem Reservoir verbunden sind.

3. Vorrichtung nach einem der Ansprüche 1 oder 2, dadurch gekennzeichnet, dass jede der in Reihe geschalteten Waschstufen mehrere parallelgeschaltete Venturiwäscher enthält.

4. Verfahren zur Entwerfung eines Gasstromes durch Wäsche in einer Vorrichtung nach einem der Ansprüche 1 bis 3, dadurch gekennzeichnet dass der Gasstrom in einen ersten Teilraum geleitet, von einem ersten Venturiwäscher von einem ersten Teil seines Schwefelgehaltes befreit und in einen zweiten Teilraum gefördert wird, wonach im zweiten Teilraum eine Phasentrennung zwischen der Waschflüssigkeit und dem Gasstrom erfolgt, die Waschflüssigkeit aus dem unteren Bereich des zweiten Teilraumes abgezogen und der Gasstrom im oberen Bereich des zweiten Teilraumes einem zweiten Venturiwäscher zugeführt und dieser Vorgang wiederholt wird, bis der Gasstrom in einem letzten Teilraum als entschwefelter Gasstrom vorliegt und aus dem oberen Bereich dieses Teilraumes abgezogen wird.

**Revendications**

1. Dispositif pour séparer des composés contenant du soufre, notamment de l'hydrogène sulfuré, partir d'un courant de gaz, dans lequel, au moyen d'au moins deux laveurs à venturi (11, 16, 21) disposés verticalement et branchés en série par rapport au courant de gaz, les composés contenant du soufre sont extraits par lavage du courant de gaz au moyen d'un liquide de lavage, caractérisé en ce que les laveurs à venturi (11, 16, 21) sont disposés dans un récipient orienté sensiblement verticalement à des hauteurs sensiblement identiques et sont situés chacun du côté entrée et du côté sortie dans des volumes partiels (7, 12, 17 22), séparés l'un de l'autre, du récipient, l'extrémité de sortie de chaque laveur à venturi étant située dans le même volume partiel que l'extrémité d'entrée du laveur à venturi immédiatement suivant, en ce que les volumes partiels (7, 12, 17, 22) du récipient sont constitués au moins en partie par des parois séparatrices comportant une partie ou tôle séparatrice supérieure (8, 13, 18) s'appuyant contre le plafond de récipient et orientée sensiblement verticalement, une partie ou tôle séparatrice médiane (9, 14, 19) assurant un mouillage horizontal de la paroi séparatrice et traversée par un laveur à venturi, et une partie ou tôle séparatrice inférieure (15, 20) orientée sensiblement verticalement, la paroi séparatrice d'un premier volume partiel (7) se composant seulement d'une partie ou tôle séparatrice supérieure (8) et d'une partie ou tôle séparatrice médiane (9, 10) reliées à la paroi du récipient, en ce qu'au moins quelque volumes partiels (12, 17, 22) sont ouverts dans la zone inférieure du récipient et se terminent dans un réservoir commun pour le liquide de lavage à évacuer et en ce qu'un premier volume partiel (7) comporte une tubulure d'admission (5) pour le courant gazeux à épurer tandis qu'un dernier volume partiel (22) comporte une tubulure d'évacuation (6) du courant gazeux épuré.

2. Dispositif selon la revendication 1, caractérisé en ce que des volumes partiels (7) ne se terminant pas dans un réservoir commun sont reliés au réservoir par l'intermédiaire d'un tuyau de liquide (29) commenocant dans sa zone inférieure.

3. Dispositif selon l'une des revendications 1 ou 2, caractérisé en ce que chacun des étages de lavage branchés en séries contient plusieurs laveurs à venturi branches en parallèlele.

4. Procédé pour la désulfuration d'un courant de gaz par lavage dans un dispositif conforme à l'une des revendications 1 à 3, caractérisé en ce que le courant de gaz est canalisé dans un premier volume partiel, en ce qu'il est libéré d'une partie de sa teneur en soufre par un premier laveur à venturi et canalisé vers un second volume partiel, en ce qu'ensuite il se produit dans le second volume partiel une séparation de phases entre le liquide de lavage et le courant de gaz, en ce que le liquide de lavage est évacué de la zone inférieure du second volume partiel tandis que le courant de gaz est introduit par la zone supérieure du second volume partiel dans un laveur à venturi et en ce que ce processus est répété jusqu'à que le courant de gaz se présente dans un dernier volume partiel sous forme d'un courant de gaz désulfuré et qui est évacué à partir de la zone supérieure de ce volume partiel.

**Claims**

1. Apparatus for separating sulphur-containing compounds, in particular hydrogen sulphide from a gas stream, in which, by means of at least two verticallyarranged Venturi-scrubbers (11, 16, 21) which are connected in series in respect of the gas stream, the sulphur-containing compounds are washed out of the gas stream by washing liquid, characterised in that the Venturi-scrubbers (11, 16, 21) are arranged at essentially the same height in an essentially vertically aligned container, and at the inlet ends and outlet ends are in each case arranged in subchambers (7, 12, 17, 22) of the container which are separated from one another, the outlet end of one Venturi-scrubber being located in the same sub-chamber as the inlet end of the following Venturi-scrubber; that the subchambers (7, 12, 17, 22) of the container are at least in part formed by partition walls which consist of an upper essentially vertically extending part or partition plate (8, 13, 18) which is attached to the roof of the container, a central part or partition plate (9, 14, 19) which effects a horizontal displacement of the partition wall and through which a Venturi-scrubber passes, and a lower essentially vertical component or partition plate (15, 20), the partition wall of a first subchamber (7) consisting only of an upper (8) and a central component or partition plate (9, 10) which is attached to the container wall; that at least some sub-chambers (12, 17, 22) are open in the lower region of the container and terminate in a common reservoir for washing liquid which is to be withdrawn; and that a first sub-chamber (7) is provided with a supply connection (5) for the gas stream which is to be cleaned, and a last subchamber (22) isprovided with a discharge connection (6) for the cleaned gas stream.

2. Apparatus according to claim 1, characterised in that sub-chambers (7) which do not terminate in the common reservoir are connected to the reservoir by way of a liquid pipeline which starts in the lower region thereof.

3. Apparatus according to one of Claims 1 and 2, characterised in that each of the series-connected washing stages contains a plurality of parallel-connented Venturi-scrubbers.

4. A method of desulphurizing a gas stream by washing in apparatus as claimed in one of Claims 1 to 3, characterised in that the gas stream is led into a first sub-chamber, freed from a first part of its sulphur content by a first Venturi-scrubber and led into a second sub-chamber, after which in the second sub-chamber, a phase separation between the washing liquid and the gas stream is carried out, the washing fluid is discharged from de lower region of the second sub-chamber ant the gas stream in the upper region of the second sub-chamber is fed to a second Venturi-scrubber and this process is repeated until the gas stream in a last sub-chamber represents a desulphurized gas stream and is discharged from the upper region of this sub-chamber.